# FASCICULE DE BREVET EUROPEEN

(11) **EP 0 428 457 B1**
(45) Date de publication et mention de la délivrance du brevet: **26.01.1994**
(21) Numéro de dépôt: 90420489.8
(22) Date de dépôt: 14.11.1990
(51) Int. Cl.: H01M 4/04, H01M 4/26, B05C 9/04, B05C 11/10, B05D 1/00

(54) **Procédé et dispositif d'empâtage d'une structure alvéolaire en forme de plaque**
Verfahren und Vorrichtung zum Pastieren einer zellenförmigen Struktur in Plattenform
Process and means for pasting a honeycombed structure in plate form

(30) Priorité: 16.11.1989 FR 8915291
(43) Date de publication de la demande: 22.05.1991
(73) Titulaire: SORAPEC S.A., F-94120 Fontenay-sous-Bois (FR)
(72) Inventeur: Bugnet, Bernard, F-01630 Saint-Genis-Pouilly (FR); Doniat, Denis, F-94170 Le Perreux (FR); Rouget, Robert, F-75016 Paris (FR)
(74) Mandataire: Moinas, Michel

(56) Documents cités:
- FR-A- 2 299 732
- GB-A- 2 020 221
- US-A- 3 758 340
- PATENT ABSTRACTS OF JAPAN, vol. 9, no. 126 (E-318)[1849], 31 mai 1985; & JP-A-60 14 755 (NIHON DENCHI K.K.) 25-01-1985

## Description

La présente invention est relative à un procédé et dispositif d'empâtage d'une structure alvéolaire en forme de plaque ou bande. Par empâtage, on entend désigner dans la suite de cet exposé une opération consistant à faire pénétrer une matière à l'état pâteux dans une structure présentant une grande porosité. Une telle opération intervient par exemple lors de la réalisation d'électrodes de cadmium, de nickel, de zinc, d'hydrures ou de plomb dont certaines peuvent être plastifiées.

L'exposé FR 2 548 459 de la demanderesse divulgue la composition et le mode de réalisation d'une électrode plastifiée de cadmium. Pour mémoire, une telle électrode est réalisée à partir d'un support d'électrode constitué d'une mousse de nickel d'épaisseur environ 2 mm et dont les pores présentent un diamètre moyen de 0,7 mm. Dans cette mousse est introduite une matière active se présentant sous la forme d'une pâte réalisée par malaxage d'oxyde de cadmium, d'un agent plastifiant tel que 3 % par exemple de polytétrafluoroéthylène aqueux, d'un diluant alcoolique tel que l'éthanol dans une proportion de 0,8 ml/g d'oxyde de cadmium et d'un agent de consistance pour améliorer l'onctuosité qui peut être un méthyl-cellulose en proportion de 1 % par rapport à la masse d'oxyde de cadmium. Cette opération d'empâtage est suivie d'une première opération de calandrage puis d'une première opération de séchage à basse température. Pour améliorer la tenue électrochimique en cyclage de cette électrode il est prévu par la suite un dopage de cette électrode dans un bain de sel de nickel, puis un second séchage. Enfin, une dernière opération de calandrage qui réduit de moitié l'épaisseur de cette électrode ce qui la consolide et assure une meilleure tenue mécanique.

L'empâtage du support d'électrode en matière active à l'état de pâte préalablement malaxée, constitue une opération essentielle et délicate de la réalisation de tels types d'électrodes. La définition des caractéristiques de l'électrode, en termes de capacité surfacique, est directement liée à la quantité de matière active introduite dans le support unité de surface. Le but de l'invention est d'assurer l'homogénéité des quantités de matière active introduites dans le support par l'introduction de volumes homogènes par unité de surface d'une pate de densité connue.

Un second avantage recherché dans le dispositif et le procédé selon l'invention est la possibilité de préserver la pâte de l'évaporation rapide de son diluant, par transport jusqu'au contact du support d'électrode, à l'abri du contact de l'air sur ses faces.

Le but de la présente invention est un procédé et dispositif industriel d'empâtage d'une structure réticulée alvéolaire assurant une meilleure qualité opératoire. La conception de ce procédé et dispositif doit également assurer une fiabilité de l'opération aussi bien dans le temps que pour une production à grande échelle.

Ces buts sont réalisés grâce à un procédé d'empâtage d'une structure réticulée alvéolaire en forme de plaque ou bande consistant à :
- introduire de manière continue et régulière de la matière à l'état pâteux en sandwich entre deux bandes mobiles de transport animées d'une même vitesse et amenant cette matière selon une épaisseur définie en translation à plat sur un plateau sensiblement horizontal,
- ôter la bande mobile opposée à celle se présentant en contact avec le plateau faisant ainsi apparaître la face supérieure de la matière,
- amener au niveau du plateau la structure alvéolaire sur la face supérieure de la matière,
- presser la matière dans la structure alvéolaire,
- séparer la structure alvéolaire empâtée de la bande inférieure.

Selon un autre mode d'exécution, le procédé consiste à :
- introduire de manière continue et régulière de la matière à l'état pâteux contrôlée entre les deux bandes mobiles primaires de transport animées d'une même vitesse et amenant cette première matière en translation à plat sur un plateau sensiblement horizontal,
- introduire parallèlement de manière continue et régulière de la matière à l'état pâteux en sandwich entre deux bandes mobiles secondaires de transport animées d'une même vitesse égale à celle des bandes mobiles primaires et amenant cette seconde matière au-dessus du plateau,
- ôter la bande mobile primaire opposée à celle se présentant en contact avec le plateau faisant ainsi apparaître la face supérieure de la première matière,
- ôter la bande mobile secondaire opposée à celle se présentant le plus haut au-dessus du plateau faisant ainsi apparaître, au niveau du plateau, la face inférieure de la seconde matière,
- amener au niveau du plateau la structure alvéolaire sur la face supérieure de la première matière,
- presser les bandes portant la matière au contact de la structure alvéolaire,
- ôter la bande mobile secondaire supérieure de la structure alvéolaire empâtée,
- séparer la structure alvéolaire empâtée de la bande mobile primaire inférieure.

Avantageusement, le dispositif pour la mise en oeuvre du procédé comprend au moins deux bandes mobiles parcourant de haut en bas les deux parois obliques opposées d'une trémie vibrante et quittant le fond de cette trémie verticalement et parallèles entres elles en passant entre deux cylindres transversaux qui calibrent l'épaisseur et par voie de conséquence permettent de définir et contrôler la quantité de matière à l'état pâteux prise par unité de surface de bande. La quantité de matière qui sera introduite par unité de surface dans la structure alvéolaire permet à son tour de définir et contrôler la capacité surfacique de l'électrode ainsi réalisée.

De préférence, une bande mobile devant être ôtée du contact de la matière à l'état pâteux effectue une rotation d'au moins 45° autour d'un axe de faible diamètre.

Comme on peut facilement le comprendre, le dispositif selon l'invention est tout particulièrement intéressant dans la mesure où les opérations de pressage sont réalisées grâce à des moyens mécaniques comprenant une paire de cylindres parallèles horizontaux transversalement au sens de déplacement de la matière sur le plateau, le bord inférieur du premier étant écarté d'une distance prédéterminée du bord supérieur du second qui lui-même peut affleurer au niveau du plateau sensiblement horizontal.

Utilement, le procédé peut être appliqué pour la réalisation d'électrodes empâtées sur une face ou deux faces et plus particulièrement pour des électrodes dont le support est une structure alvéolaire réalisée en nickel et la matière à l'état pâteux est à base d'oxyde de cadmium.

L'invention est décrite ci-après de façon plus détaillée à l'aide d'exemples d'exécution sans caractère limitatif illustrée aux dessins annexés dans lesquels :
- la figure 1 représente schématiquement un dispositif pour l'empâtage sur une face seulement de la structure alvéolaire et,
- la figure 2 représente schématiquement un dispositif prévu pour l'empâtage sur deux faces simultanément.

Pour une meilleure compréhension de l'exposé, le procédé et le dispositif sont décrits dans le cadre de réalisation d'électrodes de cadmium étant bien entendu que l'invention peut être utilisée lors de la fabrication de tout autre objet plan en matériaux composites faisant intervenir une opération d'empâtage.

On décrira dans un premier temps, un dispositif plus spécialement destiné à l'empâtage de structures minces et mettant de ce fait en oeuvre un empâtage à travers une seule face.

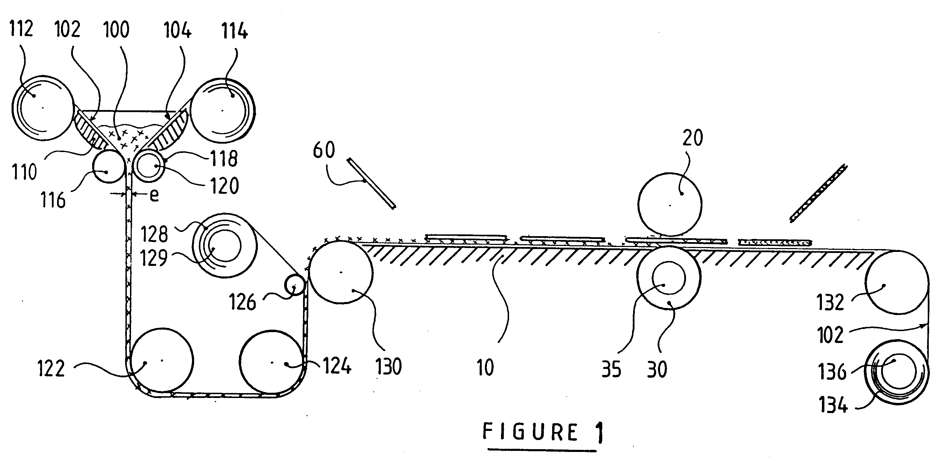

Tel qu'illustré sur la figure 1, le dispositif prévu pour l'empâtage à travers une face comprend d'abord une trémie 110. Cette trémie a la forme d'un bac comprenant deux côtés longitudinaux obliques orientés vers le bas qui sont fermés par deux parois latérales verticales. Les deux parois longitudinales ne se rejoignent pas vers le bas et créent donc ainsi une ouverture au fond de cette trémie. Deux cylindres 116 et 118 sont situés respectivement proches des bords inférieurs des parois obliques dont ils sont parallèles. Ces deux cylindres sont animés en rotation par un moteur 120. Ces deux cylindres constituent une calandreuse permettant le réglage de l'ouverture du fond de la trémie 110.

Une au moins des parois longitudinales obliques est animée d'un mouvement de vibration destiné à assurer l'écoulement régulier de la pâte.

Ce dispositif comprend ensuite un plateau horizontal 10 situé de préférence à environ 80 cm du sol soit la hauteur standard d'une table de travail. La largeur minimum de cette table correspond à la largeur maximum des structures alvéolaires en forme de plaque sensiblement rectangulaire ou bandes prévues pour être travaillées. Utilement, cette largeur est de l'ordre de 50 cm.

Deux cylindres, un inférieur 30 et un supérieur 20 formant ensemble une calandreuse se situent au milieu environ de ce plateau 10 dans le sens de défilement de la pâte. Les axes de ces cylindres sont disposés dans un plan vertical, donc orthogonal, à ce plateau. Plus particulièrement, le bord supérieur du cylindre inférieur 30 affleure au niveau de ce plateau 10. La hauteur du cylindre supérieur 20 est réglable pour modifier à volonté l'écartement entre le plateau 10 et le bord inférieur de ce cylindre 20. Les deux cylindres sont entraînés par un moteur indépendant 35.

Un premier tambour-magasin 112 situé proche du bord supérieur de l'une des parois obliques de la trémie 110 et parallèle à ce même bord alimente le dispositif avec une première bande mobile 102 de préférence en plastique souple transparent. Cette bande mobile souple 102 partant du tambour 112 couvre de haut en bas la face interne de la paroi oblique adjacente qu'elle quitte verticalement en passant entre les deux cylindres 116 et 118. Cette bande 102 est ensuite amenée par les poulies 122, 124 et 130 à plat sur la face supérieure du plateau 10. La bande 102 parcourt ensuite toute la longueur de ce plateau 10 notamment en passant entre les cylindres 20 et 30 de la calandreuse médiane. Enfin, après une dernière rotation autour d'une poulie 132 située à l'extrémité du plateau 10, cette bande 102 s'enroule autour du tambour 134 de réception. Un moteur 136 tourne le tambour de réception 134 faisant ainsi avancer la bande 102 d'une extrémité à l'autre de son parcours.

Un deuxième tambour-magasin 114 alimente le dispositif avec une deuxième bande mobile 104 également en plastique transparent. Ce tambour-magasin 114 est situé parallèlement proche du bord supérieur de la seconde paroi oblique de la trémie 110. Symétriquement par rapport au plan médian de la trémie 110, la seconde bande mobile 104 parcourt la face interne de la seconde paroi oblique pour sortir verticalement hors de cette trémie entre les deux cylindres 116 et 118, donc parallèlement à la première bande 102. Cette seconde bande mobile 104 accompagne la première bande mobile 102 de la poulie 122 en continuant par la poulie 124 jusqu'à un axe de faible diamètre 126 situé peu avant la poulie 130 située à l'extrémité gauche du plateau 10. Au niveau de cet axe de faible diamètre 126, la bande mobile 104 s'écarte de la première bande mobile 102 pour s'enrouler sur un tambour de réception 128 tourné par un moteur 129. En d'autres termes, le moteur 129 tournant le tambour de réception 128 entraîne la bande mobile 104 sur tout son parcours.

Tel que décrit, le dispositif fonctionne de la manière suivante.

L'opérateur commence par mettre en place les tambours-magasins 112 et 114 qu'il dévide pour installer les bandes mobiles 102,104 selon leur parcours respectif. Puis il engage chaque bande mobile 102,104 dans leur tambour de réception 134,128 respectif. L'opérateur peut ensuite enclencher les deux moteurs 129 et 136 liés au tambour de réception entraînant par la même les bandes mobiles 102 et 104. Il règle la vitesse de ces moteurs de telle sorte que la vitesse de translation de chacune des deux bandes soit identique. Enfin, l'opérateur enclenche les moteurs 120 et 35 des deux calandreuses du dispositif.

La production d'électrodes alvéolaires empâtées peut alors proprement commencer. Pour ce, l'opérateur alimente la trémie 110 en matière pâteuse 100 présentant des caractéristiques rhéologiques adéquates. A la sortie de cette trémie 110 soumise à vibrations la pâte 100 est emmenée de manière continue par les deux bandes 102,104. Le passage entre les cylindres 116 et 118 assure une distribution régulière de matière 100 par unité de surface de bande 102/104. Le sandwich constitué par la matière pâteuse 100 prise entre les deux bandes mobiles 102/104 est alors guidé par les deux poulies 122,124 jusqu'à l'une des extrémités du plateau 10. Peu avant la poulie d'entrée 130, la bande mobile 114 tournant d'un angle supérieur à 45° autour de l'axe de faible valeur 126 se détache de la matière pâteuse pour continuer en direction de son tambour de réception 128. Après rotation autour de la poulie 130, la bande mobile 102 amène donc la matière pâteuse 100 à plat en translation le long de ce plateau 10. La face supérieure de cette matière 10 n'est maintenant plus protégée.

C'est entre la poulie 130 et la calandreuse 20/30 que le support alvéolaire est amené au contact de la pâte. Puis, lorsque le support 60 passe entre les cylindres de la calandreuse, il y a pressage de ce support dans la pâte, c'est-à-dire que cette pâte est forcée de pénétrer dans les alvéoles ouvertes et communicantes du support. Compte-tenu des caractéristiques rhéologiques de cette pâte, de sa disposition régulière sur la bande 102 et du pressage à valeur constante effectué par les cylindres 20/30, cette dernière opération assure un empâtage homogène sur toute la longueur de la structure alvéolaire.

La longueur du plateau 10 au-delà de la calandreuse 20/30 constitue la zone de dégagement du dispositif. Le film 102 se sépare automatiquement de la face inférieure de la plaque empâtée par rotation autour de la poulie 132.

Comme on peut le constater, ce dispositif permet de saisir de manière continue une pâte en une épaisseur parfaitement contrôlée, de la transporter tout en la protégeant contre un séchage prématuré, de la présenter convenablement pour recevoir une structure 60 avant passage dans la calandreuse qui applique cette structure 60 dans la pâte assurant ainsi un empâtage homogène d'une quantité de pâte par unité de surface de la structure. Cette protection de la pâte lors de son transport est avantageuse en ce qu'un arrêt de courte durée du dispositif ne conduit pas à une altération de la pâte.

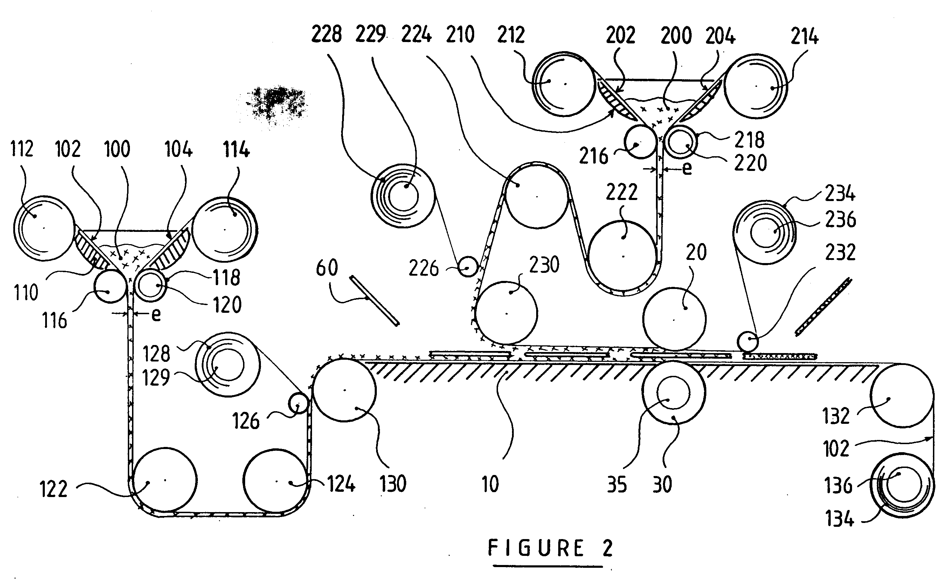

La figure 2 illustre un dispositif prévu pour un empâtage d'une structure 60 par les deux faces simultanément. Sur cette figure, les parties similaires à celles décrites précédemment sont désignées par des références identiques. On y reconnaît notamment un plateau sensiblement horizontal 10 avec une calandreuse médiane constituée par les deux cylindres 20 et 30, animés en rotation par un moteur 35. On y reconnaît également une première trémie 110 et un dispositif de bandes mobiles primaires 102/104. Comme précédemment, la bande mobile 104 est récupérée peu avant le plateau 10 sur le tambour de réception 128 alors que la bande mobile 102 est animée en un mouvement de translation sur ce même plateau 10 avant d'être récupérée à l'autre extrémité sur son tambour de réception 134.

Un second dispositif de distribution de matière à l'état pateux 200 comprend une trémie 210 soumise à vibrations pour favoriser l'écoulement de la pâte que complète à sa sortie une calandreuse constituée par les cylindres 216 et 218, animés par un moteur électrique 220. La bande mobile secondaire 204 parcourt d'abord la face interne de l'une des parois obliques de la trémie 210 qu'elle quitte verticalement en passant entre les deux cylindres 116,218. Cette bande mobile secondaire 204 est ensuite guidée au-dessus du plateau 10 par les poulies 222,224 et 230. Après rotation autour de cette dernière poulie 230, cette bande mobile secondaire 204 se retrouve au-dessus de la première bande mobile 102 et parallèlement à celle-ci. La bande mobile secondaire 204 passe également entre les deux cylindres 20 et 30 avant de s'enrouler autour d'un axe de faible diamètre 232 qui la dirige vers son tambour de réception 234 animé en rotation par un moteur 236.

Une deuxième bande mobile secondaire 202 parcourt la face interne de la paroi oblique opposée à la première de la trémie 210 qu'elle quitte en passant également entre les cylindres 216 et 218. Cette seconde bande secondaire 202 accompagne la première bande secondaire 204 autour des poulies 222 et 224 jusqu'au cylindre de faible diamètre 226 qui l'éloigne alors de la bande mobile 204 en la dirigeant vers son tambour de réception 228 animé par un moteur 229.

La mise en oeuvre du dispositif selon la figure 2 présente un certain nombre de similitudes avec celle décrite en référence à la figure 1. Après avoir installé les bandes primaires 102,104, l'opérateur installe également les bandes secondaires mobiles 202,204 autour des poulies 222,224 puis d'une part autour du cylindre 226 et du tambour de réception 228 pour la bande mobile 202, d'autre part autour de la poulie 230, sous le cylindre 20 puis autour du cylindre de faible diamètre 232 avant de l'accrocher dans son tambour de réception 234 pour la bande 204. Les vitesses des moteurs 229 et 236 sont ajustées de telle sorte que les bandes mobiles secondaires 202,204 se déplacent à la même vitesse, vitesse étant elle-même identique à celle des bandes primaires. Ainsi. la bande secondaire 204 se déplace-t-elle au-dessus du plateau 10 entre la poulie 230 et le cylindre de faible diamètre 232 à la même vitesse que la bande primaire 102.

En même temps qu'il alimente la trémie 110 en matière à l'état pâteux 100, l'opérateur alimente également la trémie 210 avec la même matière 200. Grâce à ce second dispositif, de la matière est amenée de manière continue et régulière jusqu'à la poulie 230 où elle se présente donc parallèlement à la première, amenée par la bande mobile 102. Ainsi, les structures alvéolaires 60 amenées avant cette poulie 230 se retrouvent par la suite entourées en leurs faces inférieure et supérieure de matière à l'état pâteux.

Comme on peut le constater, de par la disposition des cylindres 20 et 30, le pressage de la matière à l'état pâteux s'effectue de manière symétrique sur les deux faces.

Bien évidemment, la quantité de matière transportée aura été adaptée en règlant les cylindres 116/118 et 216/218 en relation avec l'épaisseur des structures alvéolaires 60 travaillées et la capacité surfacique recherchée pour l'électrode.

Naturellement, l'invention n'est nullement limitée aux modes de réalisations particuliers qui ont été décrits, mais en embrasse toutes les variantes. On pourra, sans sortir du cadre de l'invention, remplacer tout moyen par un moyen équivalent.

## Revendications

1. Procédé d'empâtage d'une structure (60) alvéolaire caractérisé en ce qu'il comprend les étapes suivantes :
- introduire de manière continue et régulière de la matière (100) à l'état pâteux en sandwich entre deux bandes mobiles (102,104) de transport animées d'une même vitesse et amenant cette matière selon une épaisseur définie en translation à plat sur un plateau sensiblement horizontal (10),
- ôter la bande mobile (104) opposée à celle (102) se présentant en contact avec le plateau faisant ainsi apparaître la face supérieure de la matière,
- amener au niveau du plateau la structure alvéolaire (60) sur la face supérieure de la matière,
- presser la matière dans la structure alvéolaire,
- séparer la structure alvéolaire empâtée de la bande inférieure (102).

2. Procédé d'empâtage d'une structure alvéolaire selon la revendication 1, caractérisé en ce qu'il comprend les étapes suivantes :
- introduire de manière continue et régulière de la matière à l'état pâteux en sandwich entre les deux bandes mobiles primaires (102,104) de transport animées d'une même vitesse et amenant cette première matière (100) en translation à plat sur un plateau sensiblement horizontal (10),
- introduire parallèlement de manière continue et régulière de la matière à l'état pâteux en sandwich entre deux bandes mobiles (202,204) secondaires de transport animées d'une même vitesse égale à celle des bandes mobiles primaires et amenant cette seconde matière au-dessus du plateau (10),
- ôter la bande mobile primaire (104) opposée à celle se présentant en contact avec le plateau faisant ainsi apparaître la face supérieure de la première matière,
- ôter la bande mobile secondaire (202) opposée à celle se présentant le plus haut au-dessus du plateau faisant ainsi apparaître, au niveau du plateau (10), la face inférieure de la seconde matière,
- amener au niveau du plateau (10) la structure alvéolaire (60) sur la face supérieure de la première matière (100),
- presser les bandes portant la matière dans la structure alvéolaire,
- ôter la bande mobile secondaire (204) supérieure de la structure alvéolaire empâtée,
- séparer la structure alvéolaire empâtée de la bande mobile primaire inférieure (102).

3. Dispositif pour la mise en oeuvre du procédé selon la revendication 1 ou 2, caractérisé en ce qu'il comprend au moins deux bandes (102/104,202/204) mobiles parcourant de haut en bas les deux parois obliques opposées d'une trémie (110,210) soumise à vibrations et quittant le fond de cette trémie verticalement et parallèles entres elles en passant entre deux cylindres transversaux (116/118,216/218) qui calibrent la quantité de matière à l'état pâteux prise par unité de surface de bande.

4. Dispositif pour la mise en oeuvre du procédé selon la revendication 1 ou 2, caractérisé en ce qu'une bande mobile devant être ôtées du contact de la matière à l'état pâteux effectue une rotation d'au moins 45° autour d'un axe de faible diamètre (126,232).

5. Dispositif pour la mise en oeuvre du procédé selon la revendication 1 ou 2, caractérisé en ce que les opérations de pressage sont réalisées grâce à des moyens mécaniques comprenant une paire de cylindres (20,30) parallèles horizontaux disposés à la verticale transversalement au sens de déplacement de la matière sur le plateau, le bord inférieur du premier (20) étant écarté d'une distance prédéterminée du bord supérieur du second (30) qui lui-même affleure au niveau du plateau sensiblement horizontal (10).

6. Utilisation du procédé selon la revendication 1 pour la réalisation d'électrodes empâtées à travers une face du support dans le volume de celui-ci.

7. Utilisation du procédé selon la revendication 2 pour la réalisation d'électrodes empâtées à travers les deux faces du support dans le volume de celui-ci.

8. Utilisation du procédé selon la revendication 6 ou 7, caractérisée en ce que la structure alvéolaire est réalisée en nickel et en ce que la matière à l'état pâteux est à base d'oxyde de cadmium.

## Patentansprüche

1. Verfahren zum Pastieren einer zellenförmigen Struktur (60), dadurch gekennzeichnet, daß es die folgenden Schritte umfaßt:
- kontinuierliches und regelmäßiges Einbringen des Materials (100) in pastenförmigem Zustand in einer Sandwichanordnung zwischen zwei bewegliche Förderbänder (102, 104), die mit derselben Geschwindigkeit bewegt werden und dieses Material mit einer bestimmten Dicke waagrecht auf eine im wesentlichen horizontale Platte (10) bringen,
- Entfernen des beweglichen Bandes (104), das jenem (102) gegenüberliegt, das sich mit der Platte in Kontakt befindet, wodurch die obere Oberfläche des Materials freigelegt wird,
- Befördern der zellenförmigen Struktur (60) auf die obere Oberfläche des Materials in Höhe der Platte,
- Einpressen des Materials in die zellenförmige Struktur,
- Separieren der pastierten zellenförmigen Struktur vom unteren Band (102).

2. Verfahren zum Pastieren einer zellenförmigen Struktur nach Anspruch 1, dadurch gekennzeichnet, daß es die folgenden Schritte umfaßt:
- kontinuierliches und regelmäßiges Einbringen des Materials (100) in pastenförmigem Zustand in einer Sandwichanordnung zwischen die beiden ersten beweglichen Förderbänder (102, 104), die mit derselben Geschwindigkeit bewegt werden und das erste Material (100) translatorisch auf eine im wesentlichen horizontale Platte (10) schieben,
- paralleles, kontinuierliches und regelmäßiges Einbringen des Materials in pastenförmigem Zustand in einer Sandwichanordnung zwischen zwei bewegliche, zweite Förderbänder (202, 204), die mit derselben Geschwindigkeit bewegt werden, die gleich jener der ersten beweglichen Bänder ist, und dieses zweite Material oberhalb der Platte (10) befördern,
- Entfernen des ersten beweglichen Bandes (104), das jenem (102) gegenüberliegt, das sich mit der Platte in Kontakt befindet, wodurch die obere Oberfläche des ersten Materials freigelegt wird,
- Entfernen des zweiten beweglichen Bandes (202), das jenem gegenüberliegt, das oberhalb der Platte höher liegt, wodurch in Höhe der Platte (10) die untere Oberfläche des zweiten Materials freigelegt wird,
- Befördern der zellenförmigen Struktur (60) auf die obere Oberfläche des ersten Materials (100) in Höhe der Platte (10),
- Anpressen der Bänder, die das Material tragen, an die zellenförmige Struktur,
- Entfernen des oberen, zweiten beweglichen Bandes (204) von der pastierten zellenförmigen Struktur,
- Separieren der pastierten zellenförmigen Struktur vom beweglichen ersten unteren Band (102).

3. Vorrichtung zum Ausführen des Verfahrens nach Anspruch 1 oder 2, dadurch gekennzeichnet, daß es zumindest zwei bewegliche Bänder (102/104, 202/204) umfaßt, die von oben nach unten entlang der beiden gegenüberliegenden schrägen Wände eines in Vibration versetzten Trichters (110, 210) verlaufen und den Boden dieses Trichters vertikal und parallel zueinander verlassen, wobei sie zwischen zwei transversal liegenden Zylindern (116/118, 216/218) durchlaufen, welche die Menge des Materials in pastenförmigem Zustand regulieren, die pro Einheit der Bandoberfläche verwendet wird.

4. Vorrichtung zum Ausführen des Verfahrens nach Anspruch 1 oder 2, dadurch gekennzeichnet, daß ein bewegliches Band, das aus dem Kontakt mit dem Material im pastenförmigen Zustand entfernt wird, eine Drehung von zumindest 45° um eine Achse mit geringem Durchmesser (126, 232) ausführt.

5. Vorrichtung zum Ausführen des Verfahrens nach Anspruch 1 oder 2, dadurch gekennzeichnet, daß die Preßvorgänge mit mechanischen Mitteln ausgeführt werden, die ein Paar parallele horizontale Zylinder (20, 30) umfassen, die auf der Senkrechten, die sich quer zur Verschiebungsrichtung des Materials auf der Platte erstreckt, angeordnet sind, wobei der untere Rand des ersten Zylinders (20) einen bestimmten Abstand zum oberen Rand des zweiten Zylinders (30) aufweist, der seinerseits in einer Ebene mit der im wesentlichen waagrechten Platte (10) liegt.

6. Anwendung des Verfahrens nach Anspruch 1 zur Herstellung von pastierten Elektroden über eine Seite eines Trägers in dessen Volumen.

7. Anwendung des Verfahrens nach Anspruch 2 zur Herstellung von pastierten Elektroden über zwei Seiten eines Trägers in dessen Volumen.

8. Anwendung des Verfahrens nach Anspruch 6 oder 7, dadurch gekennzeichnet, daß die zellenförmige Struktur aus Nickel gebildet ist und daß das Material in pastenförmigem Zustand als Basis Cadmiumoxid aufweist.

## Claims

1. A method for pasting a porous structure (60), characterized in that it comprises the following steps :
- inserting pasty material (100) continuously and evenly as a sandwich filling between two conveyer strips (102, 104) driven at the same speed to deliver said material with a predefined thickness with a flat translational motion onto a substantially horizontal platen (10),
- removing the mobile strip (104) opposite that (102) in contact with the platen to thus uncover the upper face of the material,
- bringing the porous structure (60) level with the platen onto the the upper surface of the material,
- pressing the material in the porous structure, and
- removing the pasted porous structure from the lower strip (102).

2. A method of pasting a porous structure according to claim 1, characterized in that it comprises the following steps:
- inserting the pasty material continuously and evenly between two primary mobile conveyer strips (102, 104) driven at the same speed to deliver this first material (100) with a flat translational motion onto a substantially horizontal platen (10),
- inserting in parallel pasty material continuously and evenly as a sandwich filling between two secondary mobile conveyer strips (202, 204) driven at the same speed as the primary conveyer strips to deliver this second material above the platen (10),
- removing the primary conveyer strip (104) opposite that in contact with the platen to thus uncover the upper face of the first material,
- removing the secondary conveyer strip (202) opposite that which is furthest removed from the platen to uncover the lower face of the second material level with the platen (10),
- bringing the porous structure (60) level with the platen (10) onto the the upper surface of the first material (100),
- pressing the strips carrying said material into the porous structure,
- removing the upper secondary conveyor strip (204) from the pasted porous structure, and
- removing the pasted porous structure from the lower primary conveyer strip (102).

3. An apparatus for carrying out the method according to claim 1 or 2, characterized in that it comprises at least two conveyer strips (102/104, 202/204) passing downwards past two opposite oblique walls of a vibrating hopper (110, 210), leaving the bottom of this hopper vertically and parallel to one another and passing between two transverse cylinders (116/118, 216/218) for calibrating the quantity of pasty material taken up per unit surface area of the strip.

4. An apparatus for carrying out the method according to claim 1 or 2, characterized in that a conveyer strip that must be brought out of contact with the pasty material is rotated by at least 45° about a cylinder (126, 232) of small diameter.

5. An apparatus for carrying out the method according to claim 1 or 2, characterized in that pressing operations are carried out by mechanical means comprising a pair of parallel, horizontal cylinders (20, 30) disposed one above the other transverse to the direction of motion of the material on the platen, the lower edge of the first cylinder (20) being spaced apart by a pre-determined distance from the upper edge of the second cylinder (30) which itself is flush with the substantially horizontal platen (10).

6. Use of the method according to claim 1 for the production of pasted electrodes having a porous structure pasted throughout its structure from one side.

7. Use of the method according to claim 2 for the production of pasted electrodes having a porous structure pasted throughout its structure from both sides.

8. Use according to claim 6 or 7, characterized in that the porous structure is made of nickel and the pasty material is based on cadmium oxide.
